# EUROPÄISCHE PATENTSCHRIFT

(11) **EP 2 900 528 B1**
(45) Veröffentlichungstag und Bekanntmachung des Hinweises auf die Patenterteilung: **01.05.2019**
(21) Anmeldenummer: 13756818.4
(22) Anmeldetag: 21.08.2013
(51) Int. Cl.: B60T 7/04, B60T 7/12, B60T 7/22, B60T 8/1755, B60W 30/08, B60W 30/085, B60W 30/09, B60W 30/095, G08G 1/16

(54) **VERFAHREN UND VORRICHTUNG ZUM BETRIEB EINES FAHRZEUGES UND FAHRZEUG MIT EINER SOLCHEN VORRICHTUNG**
METHOD AND DEVICE FOR OPERATING A VEHICLE AND VEHICLE HAVING SUCH A DEVICE
PROCÉDÉ ET DISPOSITIF POUR LE FONCTIONNEMENT D'UN VÉHICULE ET VÉHICULE ÉQUIPÉ D'UN TEL DISPOSITIF

(30) Priorität: 29.09.2012 DE 102012019300
(43) Veröffentlichungstag der Anmeldung: 05.08.2015
(73) Patentinhaber: Robert Bosch GmbH, 70442 Stuttgart (DE)
(72) Erfinder: BOGENRIEDER, Ralf, 70565 Stuttgart (DE); BRENK, Carsten, 88433 Schemmerhofen (DE); LAUBACHER, Karl-Eugen, 73257 Köngen (DE)
(86) Internationale Anmeldenummer: PCT/EP2013/002519
(87) Internationale Veröffentlichungsnummer: WO 2014/048530

(56) Entgegenhaltungen:
- EP-A1- 1 369 327
- EP-A1- 2 026 099
- EP-A2- 1 010 596
- DE-A1- 19 753 971
- DE-A1-102004 062 497
- DE-A1-102008 042 963
- DE-A1-102009 036 712
- DE-A1-102010 028 988
- FR-A1- 2 920 122
- US-A1- 2012 041 632
- US-B1- 6 364 433

## Beschreibung

Die Erfindung betrifft ein Verfahren und eine Vorrichtung zum Betrieb eines Fahrzeuges, wobei eine dem Fahrzeug bevorstehende Heckkollision erfasst wird und das Fahrzeug automatisch gebremst wird. Weiterhin betrifft die Erfindung ein Fahrzeug mit einer solchen Vorrichtung.

Aus der DE 10 2004 055 399 A1 ist ein Verfahren und eine Vorrichtung zum Steuern eines Fahrzeuges bekannt. Im Fall einer Kollision des Fahrzeuges wird dasselbe abgebremst, indem eine Bremse des Fahrzeuges betätigt wird. Dabei wird eine Kollision identifiziert, falls ein gezündeter Airbag des Fahrzeuges identifiziert wird und/oder falls für eine Verzögerung des Fahrzeuges ein erster Grenzwert überschritten wird. Nach einem dem Bremsen folgenden Stillstand des Fahrzeuges bleibt die Bremse solange betätigt, bis die Zündung des Fahrzeuges ausgeschaltet wird. Weiterhin ist vorgesehen, dass nach einem dem Bremsen folgenden Stillstand die Feststellbremse des Fahrzeuges aktiviert wird.

Darüber hinaus ist aus der DE 198 58 292 C2 ein Sicherheitssystem für ein Kraftfahrzeug bekannt. Das Sicherheitssystem ist zur Verminderung der Unfallfolgen bei einem Heckaufprall des Kraftfahrzeuges vorgesehen. Dabei werden der Abstand und die Relativgeschwindigkeit zu einem nachfolgenden Fahrzeug ermittelt. Bereits vor einem berechneten Heckaufprall wird eine voraussichtliche Bremskraft errechnet und der entsprechend benötigte Bremsdruck wird aufgebaut. Nach dem Heckaufprall wird ein der positiven Fahrzeug-Längsbeschleunigung zugeordnetes Vergleichssignal ermittelt, welches anschließend mit einem Schwellwert verglichen wird. Für den Fall, dass das Vergleichssignal den Schwellwert übersteigt, wird ein den Bremsvorgang fortführendes Bremssignal erzeugt.

Weitere Verfahren bzw. Vorrichtungen sind ferner aus der EP 1 369 327 A1, sowie aus der DE 10 2008 042 963 A1, der EP 1 010 596 A1 und der EP 2 026 099 A1 bekannt.

Der Erfindung liegt die Aufgabe zugrunde, ein gegenüber dem Stand der Technik verbessertes Verfahren und eine verbesserte Vorrichtung zum Betrieb eines Fahrzeuges sowie ein solches Fahrzeug anzugeben.

Die Aufgabe wird erfindungsgemäß hinsichtlich des Verfahrens durch die in Anspruch 1 und hinsichtlich der Vorrichtung durch die in Anspruch 6 angegebenen Merkmale gelöst. Zudem wird die Aufgabe erfindungsgemäß hinsichtlich des Fahrzeuges durch die in Anspruch 9 angegebenen Merkmale gelöst.

Vorteilhafte Ausgestaltungen der Erfindung sind Gegenstand der Unteransprüche.

Ein Verfahren zum Betrieb eines Fahrzeuges sieht vor, dass eine dem Fahrzeug bevorstehende Heckkollision erfasst wird und das Fahrzeug bei erfasster Heckkollision automatisch gebremst wird. Erfindungsgemäß wird ein möglicher Kollisionszeitpunkt ermittelt und in Abhängigkeit des möglichen Kollisionszeitpunktes vor Eintreten desselben wird bei Stillstand des Fahrzeuges eine Bremse aktiviert, wobei die Bremse automatisch deaktiviert wird, wenn keine Heckkollision zu dem möglichen Kollisionszeitpunkt erfasst wird.

Mittels des erfindungsgemäßen Verfahrens wird eine Plausibilisierung hinsichtlich der erfassten bevorstehenden Heckkollision durchgeführt, so dass einer aus der erfassten bevorstehenden Heckkollision resultierende Falschaktivierung der Bremse, mittels welcher das Fahrzeug vorzugsweise festgebremst wird, entgegen gewirkt wird. Wird erfasst, dass die Heckkollision zum ermittelten möglichen Kollisionszeitpunkt nicht eintritt, wird die Bremse deaktiviert, so dass Fahrzeug nicht mehr festgebremst ist und seinen Fahrbetrieb wieder aufnehmen kann. Eine Festbremsdauer des Fahrzeuges wird bei einer Falschaktivierung der Bremse bei Anwendung des erfindungsgemäßen Verfahrens verkürzt.

Erfolgt die Heckkollision, so ist die Bremse aktiviert und das Fahrzeug befindet sich im Stillstand, so dass das Risiko eines beispielsweise führerlosen ungebremsten Weiterrollens des Fahrzeuges zumindest verringert ist. Dadurch kann auch die Gefahr einer Folgekollision des Fahrzeuges und/oder ein Absturz des Fahrzeuges, sofern sich dieses auf einer Brücke oder nahe einem Abhang befindet, wesentlich vermindert werden.

Bevorzugt erfolgt die Aktivierung der Bremse bei eingetretener Heckkollision für eine vorgegebene Zeitdauer, so dass die Fahrzeugräder blockiert sind und somit im Wesentlichen ausgeschlossen werden kann, dass das Fahrzeug auf ein sich vor demselben befindendes Fahrzeug auffährt.

In einer vorteilhaften Ausgestaltung wird ein Eintritt der Heckkollision anhand erfasster Beschleunigungssignale und/oder anhand erfasster Drucksignale und/oder mechanisch erzeugter Signale erfasst. Insbesondere wird die Heckkollision durch aus der Heckkollision selbst bedingte erfassbare Signale erfasst. Besonders vorteilhaft wird die Bremse unmittelbar nach Erfassen eines solchen Signals aktiviert, da mittels eines solchen Signals die bereist erfasste dem Fahrzeug bevorstehende Heckkollision plausibilisiert wird.

In einer weiteren vorteilhaften Ausgestaltung des Verfahrens ist vorgesehen, dass der mögliche Kollisionszeitpunkt anhand eines Abstandes zwischen dem Fahrzeug und einem erfassten Kollisionsobjekt und/oder anhand einer ermittelten Relativgeschwindigkeit zwischen diesen bestimmt wird. Dabei wird der mögliche Kollisionszeitpunkt besonders bevorzugt durch fortlaufende Ermittlung des Abstandes und fortlaufende Ermittlung der Relativgeschwindigkeit ermittelt, wodurch es möglich ist, den möglichen Kollisionszeitpunkt vergleichsweise sicher zu prognostizieren.

Bevorzugt ist vorgesehen, dass die Deaktivierung der Bremse bei Betätigung eines Fahrpedals erfolgt. Dabei kann die Deaktivierung besonders bevorzugt sowohl nach der tatsächlich eingetretenen Heckkollision als auch bei einer Falschaktivierung der Bremse erfolgen. Der Fahrer hat also selbst die Möglichkeit, die Festbremsdauer zu verkürzen, wobei die Deaktivierung der Bremse nach der eingetretenen Heckkollision durch Betätigen des Fahrpedals erst nach einer vorgegebenen weiteren Zeitdauer durchgeführt werden kann. Dadurch kann die Funktion des Festbremsens zumindest für die vorgegebene Zeitdauer sichergestellt werden.

Darüber hinaus betrifft die Erfindung eine Vorrichtung zum Betrieb eines Fahrzeuges, welches eine Umgebungserfassungsvorrichtung zur Erfassung einer dem Fahrzeug bevorstehenden Heckkollision aufweist und bei erfasster Heckkollision eine Bremse ansteuerbar ist, welche das Fahrzeug bremst. Erfindungsgemäß ist die Umgebungserfassungsvorrichtung mit einer Steuereinheit zur Ermittlung eines möglichen Kollisionszeitpunktes aus mittels der Umgebungserfassungsvorrichtung erfassten ersten Signalen gekoppelt, wobei die Steuereinheit mit der Bremse gekoppelt ist und die Bremse in Abhängigkeit des möglichen Kollisionszeitpunktes bei Stillstand des Fahrzeuges ansteuerbar und aktivierbar ist. Dazu ist die Steuereinheit mit einer Kollisionserfassungsvorrichtung gekoppelt, mittels welcher ein Eintritt der Heckkollision erfassbar ist, wobei mittels der Steuereinheit ein der Bremse zuführbares Steuersignal erzeugbar ist, mittels dessen die Bremse deaktivierbar ist, wenn keine Heckkollision zu dem möglichen Kollisionszeitpunkt eintritt.

Mittels der Vorrichtung ist es in besonders vorteilhafter Weise möglich, die Bremse zu deaktivieren, wenn zu dem ermittelten möglichen Kollisionszeitpunkt keine Heckkollision eingetreten ist. Durch die Vorrichtung ist die Festbremsdauer des Fahrzeuges verkürzbar, so dass das Fahrzeug bei Nichteintritt der Heckkollision weiterfahren kann, ohne den nachfolgenden Verkehr zu behindern.

In vorteilhafter Weise weist die Umgebungserfassungsvorrichtung zumindest eine im Heckbereich des Fahrzeuges angeordnete radarbasierte Erfassungseinheit auf, so dass die Umgebung des Heckbereiches hinsichtlich eines potenziellen Kollisionsobjektes erfassbar ist. Zudem sind anhand der erfassten Signale der im Heckbereich angeordneten Erfassungseinheit ein Abstand des Fahrzeuges zu dem potenziellen Kollisionsobjekt und eine Relativgeschwindigkeit ermittelbar, so dass der mögliche Kollisionszeitpunkt prognostizierbar ist.

Die Kollisionserkennungsvorrichtung, mittels welcher die tatsächliche Heckkollision erfassbar ist, weist zumindest einen Drucksensor und/oder einen Beschleunigungssensor und/oder einen mechanisch betätigbaren Sensor auf. Durch erfasste Signale dieser Sensoren ist es in besonders vorteilhafter Weise möglich, den tatsächlichen Kollisionseintritt zu ermitteln und das Fahrzeug, beispielsweise zur Vermeidung einer Folgekollision, entsprechend festzubremsen, so dass das Fahrzeug im Stillstand weitestgehend fixiert ist.

Weiterhin betrifft die Erfindung ein Fahrzeug mit einer solchen oben beschriebenen Vorrichtung.

Ausführungsbeispiele der Erfindung werden im Folgenden anhand einer Zeichnung näher erläutert.

Dabei zeigt die:

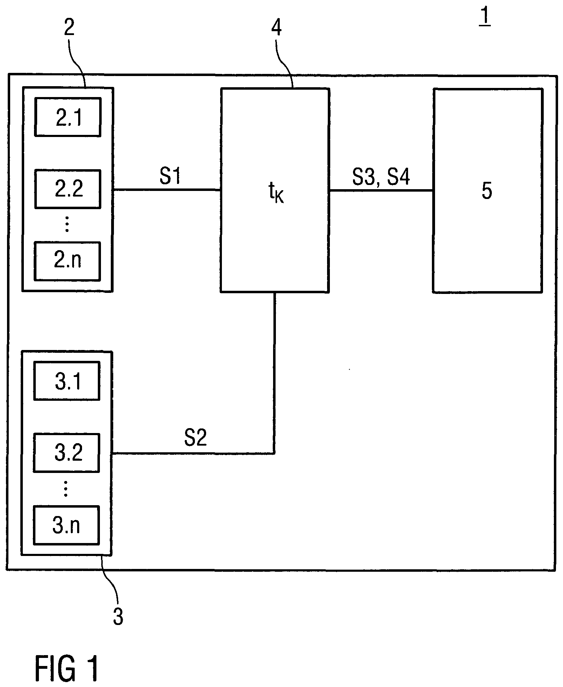

- Fig. 1: schematisch ein Fahrzeug mit einem Blockschaltbild einer Vorrichtung zum Betrieb des Fahrzeuges.

In der einzigen Figur ist ein Fahrzeug 1, insbesondere ein Personenkraftwagen, mit einer Vorrichtung zum Betrieb desselben dargestellt.

Die Vorrichtung weist eine Umgebungserfassungsvorrichtung 2, eine Kollisionserkennungsvorrichtung 3, eine Steuereinheit 4 sowie eine ansteuerbare Bremse 5 auf. Dabei kann es sich bei der Bremse 5 um eine Betriebsbremse und/oder eine Feststellbremse des Fahrzeuges 1 handeln.

Die Umgebungserfassungsvorrichtung 2 umfasst eine Anzahl von im und/oder am Fahrzeug angeordneten Erfassungseinheiten 2.1 bis 2.n, mittels denen die Umgebung des Fahrzeuges 1 erfassbar ist.

Beispielsweise funktionieren die Erfassungseinheiten 2.1 bis 2.n radarbasiert, wobei zumindest eine der Erfassungseinheiten 2.1 bis 2.n derart an und/oder in dem Fahrzeug 1 angeordnet ist, dass eine Umgebung des Heckbereiches des Fahrzeuges 1 erfassbar ist. Insbesondere dient die Erfassung der Umgebung einer Detektion eines potenziellen Kollisionsobjektes. Die Erfassungseinheiten 2.1 bis 2.n der Umgebungserkennungsvorrichtung 2 sind mit der Steuereinheit 4 verbunden, welcher die ersten Signale S1 zur Verarbeitung und Auswertung zugeführt werden.

Weiterhin umfasst die Vorrichtung die Kollisionserkennungsvorrichtung 3, welche zur Detektion einer Kollision, insbesondere einer Heckkollision, vorgesehen ist. Dazu weist die Kollisionserkennungsvorrichtung 3 eine Anzahl von Sensoreinheiten 3.1 bis 3.n auf, mittels derer erfasste Signale der tatsächliche Eintritt der Heckkollision erfassbar ist.

Dazu kann eine der Sensoreinheiten 3.1 bis 3.2 als Drucksensor, mittels dessen eine aus der Heckkollision resultierende Druckänderung erfassbar ist, ausgeführt sein. Alternativ oder zusätzlich kann es sich um eine oder mehrere Sensoreinheiten 3.1 bis 3.n handeln, die als Beschleunigungssensor bzw. Beschleunigungssensoren ausgebildet und in einem nicht näher dargestellten Airbagsteuergerät angeordnet ist. Mittels einer solchen Sensoreinheit 3.1 bis 3.2 ist eine aus der Heckkollision resultierende Beschleunigung des Fahrzeuges 1 erfassbar.

Des Weiteren kann zur Erfassung einer eingetretenen Heckkollision zusätzlich oder alternativ eine mechanisch betätigbare Sensoreinheit 3.1 bis 3.n vorgesehen sein, mittels welcher beispielsweise eine durch die Heckkollision bedingte Verformung eines Fahrzeugteiles erfassbar ist.

Auch von den Sensoreinheiten 3.1 bis 3.n der Kollisionserkennungsvorrichtung 3 erfassten zweiten Signale S2 werden der Steuereinheit 4, mit der die Kollisionserkennungseinheit verbunden ist, zugeführt.

Die Steuereinheit 4 wiederum ist mit der Bremse 5 in Form der Betriebsbremse und/oder Feststellbremse des Fahrzeuges 1 verbunden.

Die Betriebsbremse als Teil der Betriebsbremsanlage dient dazu, das Fahrzeug 1 im Fahrbetrieb gegebenenfalls bis zum Stillstand zu verzögern. Die Betriebsbremse wird üblicherweise von einem Fahrer des Fahrzeuges 1 über ein im Fahrzeuginnenraum angeordnetes Bremspedal betätigt.

Zudem verfügt das Fahrzeug 1 über die Feststellbremse, welche im aktivierten Zustand die Fahrzeugräder dauerhaft blockiert. Ist die Feststellbremse aktiviert, kann das Fahrzeug 1, ohne dass das Risiko eines ungewollten Wegrollens besteht, abgestellt werden.

Im Betrieb des Fahrzeuges 1, welches sich an einem Stauende im Stillstand befindet, wird mittels einer im Heckbereich des Fahrzeuges 1 angeordneten Erfassungseinheit 2.1 bis 2.n der Umgebungserfassungsvorrichtung 2 die Umgebung des Heckbereiches erfasst. Dabei wird ein nicht näher dargestelltes sich dem Heckbereich des Fahrzeuges 1 näherndes Fahrzeug erfasst. Das sich nähernde Fahrzeug wird insbesondere aufgrund einer Unterschreitung eines vorgegebenen Abstandes zu dem Fahrzeug 1 als potenzielles Kollisionsobjekt erfasst. Die mittels der Erfassungseinheit 2.1 bis 2.n erfassten Signale werden der Steuereinheit 4 zugeführt, die die ersten Signale S1 auswertet und verarbeitet. Dabei werden der momentane Abstand der beiden Fahrzeuge zueinander und eine Relativgeschwindigkeit mittels der erfassten ersten Signale S1 ermittelt.

Der Abstand zwischen dem sich nähernden Fahrzeug und dem Fahrzeug 1 wird mittels der Erfassungseinheiten 2.1 bis 2.n fortlaufend erfasst. Verringert sich der Abstand und ist die Heckkollision des Fahrzeuges 1 unvermeidbar, wird daraufhin von der Steuereinheit 4 ein erstes Steuersignal S3 erzeugt, welches der Bremse 5, vorzugsweise der Feststellbremse zugeführt wird und diese automatisch aktiviert. Durch die automatische Aktivierung der Feststellbremse als Bremse 5 sind die Fahrzeugräder des sich im Stillstand befindenden Fahrzeuges 1 blockiert.

Die Steuereinheit 4 ermittelt anhand der erfassten ersten Signale S1 der Umgebungserfassungsvorrichtung 2 einen möglichen Kollisionszeitpunkt t_{K}, also einen Zeitpunkt zu dem Kollision wahrscheinlich eintritt. Zu diesem Zeitpunkt sind die Fahrzeugräder mittels der aktivierten Bremse 5 nach wie vor blockiert.

Ist der mögliche Kollisionszeitpunkt t_{K} erreicht und die Sensoreinheiten 3.1 bis 3.n der Kollisionserkennungsvorrichtung 3 haben keine Signale erfasst, die auf einen Eintritt der Heckkollision hinweisen, erzeugt die Steuereinheit 4 ein zweites Steuersignal S4.

Das zweite Steuersignal S4 wird der aktivierten Bremse 5, bevorzugt der Feststellbremse zugeführt, wodurch diese automatisch deaktiviert wird und die Fahrzeugräder nicht mehr blockiert sind, so dass das Fahrzeug 1 seinen Fahrbetrieb wieder aufnehmen kann. Dabei bleibt die Bremse 5 vorzugsweise für eine vorgegebene Zeitdauer aktiviert, so dass das Fahrzeug 1 im Fall einer Falschermittlung des möglichen Kollisionszeitpunktes t_{K} festgebremst ist. Nach Ablauf dieser vorgegebenen Zeitdauer wird die Bremse deaktiviert.

Tritt die Heckkollision zum ermittelten möglichen Kollisionszeitpunkt t_{K} ein, ist die Bremse 5 in Form der Feststellbremse aktiviert, so dass sich das Fahrzeug 1 mit blockierten Fahrzeugrädern im Stillstand befindet. Der Eintritt der Heckkollision wird anhand erfasster Beschleunigungssignale und/oder erfasster Drucksignale und/oder erfasster mechanisch erzeugter Signale der Sensoreinheiten 3.1 bis 3.n der Kollisionserkennungsvorrichtung 3 ermittelt. Dadurch, dass die Bremse 5 aktiviert ist, kann die Gefahr eines ungewollten Wegrollens des Fahrzeuges 1 und somit eine Folgekollision und/oder ein Absturz des Fahrzeuges 1, beispielsweise von einer Brücke, zumindest verringert oder weitestgehend ausgeschlossen werden.

Mittels des Verfahrens, bei welchem die Bremse 5 bei Nichteintritt der Heckkollision zum anhand der erfassten ersten Signale S1 ermittelten möglichen Kollisionszeitpunkt t_{K} deaktiviert wird, wird eine Festbremszeit des Fahrzeuges 1 verringert.

Dabei kann der Nichteintritt der Heckkollision beispielsweise auf einer fehlerhaften Signalerfassung der Umgebungserfassungsvorrichtung 2 basieren, so dass die Bremse 5 aktiviert wird, ohne dass sich ein potenzielles Kollisionsobjekt dem Fahrzeug 1, insbesondere seinem Heckbereich, nähert.

Bevorzugt ist es möglich, die automatisch aktivierte Bremse 5 nach einer vorgegebenen Zeitdauer manuell zu deaktivieren, wobei hierzu ein Fahrpedal des Fahrzeuges 1 zu betätigen ist.

## Patentansprüche

1. Verfahren zum Betrieb eines Fahrzeuges (1), wobei eine dem Fahrzeug (1) bevorstehende Heckkollision erfasst wird und das Fahrzeug (1) bei erfasster Heckkollision automatisch gebremst wird,
**dadurch gekennzeichnet, dass** ein möglicher Kollisionszeitpunkt (t_{K}) ermittelt wird und in Abhängigkeit des möglichen Kollisionszeitpunktes (t_{K}) vor Eintreten desselben bei Stillstand des Fahrzeuges (1) eine Bremse (5) aktiviert wird, wobei die Bremse (5) automatisch deaktiviert wird, wenn keine Heckkollision zu dem möglichen Kollisionszeitpunkt (t_{K}) erfasst wird.

2. Verfahren nach Anspruch 1,
**dadurch gekennzeichnet, dass** die Aktivierung der Bremse (5) bei eingetretener Heckkollision für eine vorgegebene Zeitdauer erfolgt.

3. Verfahren nach Anspruch 1 oder 2,
**dadurch gekennzeichnet, dass** ein Eintritt der Heckkollision anhand erfasster Beschleunigungssignale und/oder anhand erfasster Drucksignale und/oder mechanisch erzeugter Signale erfasst wird.

4. Verfahren nach einem der vorhergehenden Ansprüche,
**dadurch gekennzeichnet, dass** der mögliche Kollisionszeitpunkt (t_{K}) anhand eines Abstandes zwischen dem Fahrzeug (1) und einem erfassten Kollisionsobjekt und/oder anhand einer ermittelten Relativgeschwindigkeit zwischen diesen bestimmt wird.

5. Verfahren nach einem der vorhergehenden Ansprüche,
**dadurch gekennzeichnet, dass** die Deaktivierung der Bremse (5) bei Betätigung eines Fahrpedals erfolgt.

6. Vorrichtung zum Betrieb eines Fahrzeuges (1), welches eine Umgebungserfassungsvorrichtung (2) zumindest zur Erfassung einer dem Fahrzeug (1) bevorstehenden Heckkollision aufweist und bei erfasster bevorstehender Heckkollision eine Bremse (5) ansteuerbar ist, welche das Fahrzeug (1) bremst,
**dadurch gekennzeichnet, dass** die Umgebungserfassungsvorrichtung (2) mit einer Steuereinheit (4) zur Ermittlung eines möglichen Kollisionszeitpunktes (t_{K}) aus mittels der Umgebungserfassungsvorrichtung (2) erfassten ersten Signalen (S1) gekoppelt ist, wobei die Steuereinheit (4) mit der Bremse (5) gekoppelt ist und die Bremse (5) in Abhängigkeit des möglichen Kollisionszeitpunktes (t_{K}) vor Eintreten desselben bei Stillstand des Fahrzeuges (1) ansteuerbar und aktivierbar ist, wobei die Steuereinheit (4) mit einer Kollisionserfassungsvorrichtung (3) gekoppelt ist, mittels welcher ein Eintritt der Heckkollision erfassbar ist, wobei mittels der Steuereinheit (4) ein der Bremse (5) zuführbares zweites Steuersignal (S4) erzeugbar ist, mittels dessen die Bremse (5) deaktivierbar ist, wenn keine Heckkollision zu dem möglichen Kollisionszeitpunkt (t_{K}) eintritt.

7. Vorrichtung nach Anspruch 6,
**dadurch gekennzeichnet, dass** die Umgebungserfassungsvorrichtung (2) zumindest eine im Heckbereich des Fahrzeuges (1) angeordnete radarbasierte Erfassungseinheit (2.1 bis 2.n) aufweist.

8. Vorrichtung nach Anspruch 6 oder 7,
**dadurch gekennzeichnet, dass** die Kollisionserkennungsvorrichtung (3) zumindest einen Drucksensor und/oder einen Beschleunigungssensor und/oder einen mechanisch betätigbaren Sensor als Sensoreinheit (3.1 bis 3.n) aufweist.

9. Fahrzeug (1) mit einer Vorrichtung nach einem der Ansprüche 6 bis 8.

## Claims

1. Method for operating a vehicle (1), wherein an imminent tail-end collision for the vehicle (1) is sensed and the vehicle (1) is automatically braked when the tail-end collision is sensed,
**characterized in that** a possible collision time (t_{K}) is determined, and a brake (5) is activated when the vehicle (1) is stationary, as a function of the possible collision time (t_{K}) before said time occurs, wherein the brake (5) is automatically deactivated if no tail-end collision is sensed at the possible collision time (t_{K}).

2. Method according to Claim 1,
**characterized in that** the activation of the brake (5) takes place for a predefined time period when the tail-end collision has occurred.

3. Method according to Claim 1 or 2,
**characterized in that** an occurrence of the tail-end collision is sensed on the basis of sensed acceleration signals and/or on the basis of sensed pressure signals and/or mechanically generated signals.

4. Method according to one of the preceding claims,
**characterized in that** the possible collision time (t_{K}) is determined on the basis of a distance between the vehicle (1) and a sensed collision object and/or on the basis of a determined relative speed between said vehicle (1) and said collision object.

5. Method according to one of the preceding claims,
**characterized in that** the brake (5) is deactivated when an accelerator pedal is activated.

6. Device for operating a vehicle (1) which has a surroundings-sensing device (2) at least for sensing a tail-end collision which is imminent for the vehicle (1), and when the imminent tail-end collision is sensed a brake (5) can be actuated which brakes the vehicle (1),
**characterized in that** the surroundings-sensing device (2) is coupled to a control unit (4) for determining a possible collision time (t_{K}) from first signals (S1) which are sensed by means of the surroundings-sensing device (2), wherein the control unit (4) is coupled to the brake (5), and the brake (5) can be actuated and activated when the vehicle (1) is stationary as a function of the possible collision time (t_{K}) before said time occurs, wherein the control unit (4) is coupled to a collision-sensing device (3) by means of which an occurrence of the tail-end collision can be sensed, wherein a second control signal (S4) which can be fed to the brake (5) can be generated by means of the control unit (4) by means of which second control signal (S4) the brake (5) can be deactivated if no tail-end collision occurs at the possible collision time (t_{K}).

7. Device according to Claim 6,
**characterized in that** the surroundings-sensing device (2) has at least one radar-based sensing unit (2.1 to 2.n) which is arranged in the rear region of the vehicle (1).

8. Device according to Claim 6 or 7,
**characterized in that** the collision-detection device (3) has at least one pressure sensor and/or one acceleration sensor and/or one mechanically activated sensor as a sensor unit (3.1 to 3.n).

9. Vehicle (1) having a device according to one of Claims 6 to 8.

## Revendications

1. Procédé de conduite d'un véhicule (1) dans lequel une collision par l'arrière survenant en avant du véhicule (1) est détectée et le véhicule (1) est freiné automatiquement lorsqu'une collision par l'arrière est détectée,
**caractérisé en ce que**
un instant possible de collision (t_{K}) est déterminé et un frein (5) est activé en fonction de l'instant possible de collision (t_{K}) et avant ce dernier lorsque le véhicule (1) est à l'arrêt, le frein (5) étant désactivé automatiquement si aucune collision par l'arrière n'a été détectée à l'instant possible de collision (t_{K}).

2. Procédé selon la revendication 1, **caractérisé en ce que** l'activation du frein (5) s'effectue pendant une durée prédéterminée lorsqu'une collision par l'arrière survient.

3. Procédé selon les revendications 1 ou 2, **caractérisé en ce que** la survenance de la collision par l'arrière est détectée par saisie de signaux d'accélération, de signaux de pression et/ou de signaux produits mécaniquement.

4. Procédé selon l'une des revendications précédentes, **caractérisé en ce que** le l'instant possible de collision (t_{K}) est déterminé à l'aide de la distance entre le véhicule (1) et un objet de collision qui a été détecté, et/ou à l'aide de la vitesse relative détectée entre ces derniers.

5. Procédé selon l'une des revendications précédentes, **caractérisé en ce que** la désactivation du frein (5) s'effectue par actionnement d'une pédale d'accélération.

6. Ensemble de conduite d'un véhicule (1) qui présente un ensemble (2) de détection de l'environnement qui détecte au moins une collision par l'arrière qui survient en avant du véhicule (1) et qui permet de commander un frein (5) qui freine le véhicule (1) lorsqu'une collision par l'arrière est détectée à l'avant,
**caractérisé en ce que**
l'ensemble (2) de détection de l'environnement est accouplé à une unité de commande (4) qui détermine un instant possible de collision (t_{K}) à partir de premiers signaux (S1) saisis au moyen du l'ensemble (2) de détection de l'environnement, l'unité de commande (4) étant accouplée au frein (5) et le frein (5) pouvant être commandé et activé en fonction de l'instant possible de collision (t_{K}) avant la survenance de la collision lorsque le véhicule (1) est à l'arrêt, l'unité de commande (4) étant accouplée à un ensemble (3) de détection de collision au moyen duquel la survenance d'une collision par l'arrière peut être détectée, un deuxième signal de commande (S4) au moyen duquel le frein (5) peut être désactivé si aucune collision par l'arrière ne survient à l'instant possible de collision (t_{K}) pouvant être amené au frein (5) au moyen de l'unité de commande (4).

7. Ensemble selon la revendication 6, **caractérisé en ce que** l'ensemble (2) de détection de l'environnement présente au moins une unité de détection (2.1 à 2.n) à base de radar disposé dans la partie arrière du véhicule (1).

8. Ensemble selon les revendications 6 ou 7, **caractérisé en ce que** l'ensemble (3) de détection de collision présente comme unité de capteur (3.1 à 3.n) au moins un capteur de pression, un capteur d'accélération et/ou un capteur actionné mécaniquement.

9. Véhicule (1) doté d'un ensemble selon l'une des revendications 6 à 8.
